(19) Europäisches Patentamt
European Patent Office
Office européen des brevets

(11) **EP 2 569 896 B1**

(12) **EUROPÄISCHE PATENTSCHRIFT**

(45) Veröffentlichungstag und Bekanntmachung des Hinweises auf die Patenterteilung:
**07.03.2018 Patentblatt 2018/10**

(21) Anmeldenummer: **11745967.7**

(22) Anmeldetag: **17.08.2011**

(51) Int Cl.:
***H04L 9/32*** *(2006.01)*

(86) Internationale Anmeldenummer:
**PCT/EP2011/064130**

(87) Internationale Veröffentlichungsnummer:
**WO 2012/034807 (22.03.2012 Gazette 2012/12)**

(54) **VERFAHREN UND VORRICHTUNG ZUM AUTHENTISIEREN VON MULTICAST-NACHRICHTEN**

METHOD AND APPARATUS FOR AUTHENTICATING MULTICAST MESSAGES

PROCÉDÉ ET DISPOSITIF D'AUTHENTIFICATION DE MESSAGES MULTIDIFFUSÉS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.09.2010 DE 102010040688**

(43) Veröffentlichungstag der Anmeldung:
**20.03.2013 Patentblatt 2013/12**

(73) Patentinhaber: **Siemens Aktiengesellschaft 80333 München (DE)**

(72) Erfinder:
• **FALK, Rainer 85586 Poing (DE)**
• **FRIES, Steffen 85598 Baldham (DE)**

(56) Entgegenhaltungen:
**DE-A1-102004 024 002    DE-A1-102008 046 563**

• **CHALLAL Y ET AL: "A taxonomy of multicast data origin authentication: Issues and solutions", IEEE COMMUNICATIONS SURVEYS, IEEE, NEW YORK, NY, US, Bd. 2, Nr. 3, 1. Juli 2004 (2004-07-01), Seiten 34-57, XP011285495, ISSN: 1553-877X**

## EP 2 569 896 B1

**Beschreibung**

Die Erfindung betrifft ein Verfahren und eine Vorrichtung zum Authentisieren von Multicast-Nachrichten, insbesondere von Multicast-Nachrichten, die zwischen Feldgeräten eines Peer-to-Peer-Systems ausgetauscht werden und als Nutzdaten jeweils eine GOOSE (Generic Object Oriented Substation Events)-Nachricht oder eine SMV (Sampled Measured Values)-Nachricht enthalten.

Ein Feldgerät überträgt nach der Erfassung eines Ereignisses Multicast-Nachrichten an andere registrierte Feldgeräte, welche die Multicast-Nachrichten empfangen. Diese Multicast-Nachrichten werden von dem Feldgerät, welches das Ereignis erfasst hat, an die übrigen Feldgeräte über eine drahtlose oder drahtgebundene Nachrichtenverbindung übertragen. Bei einem derartigen Feldgerät kann es sich beispielsweise um ein Schutzgerät, beispielsweise eine intelligente Sicherungsschaltung, handeln, die sich in einer Umspannstation eines Stromversorgungsnetzwerkes befindet. Die verschiedenen Feldgeräte können untereinander Nachrichten zum elektrischen Schutz sowie zur Übertragung von Messdaten austauschen. Ferner können die Feldgeräte verschiedenartige Funktionen überwachen und steuern. Nach Erfassung eines Ereignisses werden durch ein Feldgerät Nachrichten nicht an eine spezifische Zieladresse gesendet, sondern als eine Broadcast- bzw. Multicast-Nachricht an verschiedene empfangende Feldgeräte, welche die Multicast-Nachricht empfangen und entscheiden, ob die empfangene Nachricht ihrerseits verarbeitet wird. Die Multicast-Nachricht wird als Datenpaket übertragen, welches Verwaltungsdaten bzw. Headerdaten und Nutzdaten aufweist. Die in der Multicast-Nachricht enthaltenen Nutzdaten können durch eine GOOSE- oder eine SMV-Nachricht gebildet werden. Der Standard IEC61850 definiert Nachrichten für Substationssteuergeräte innerhalb eines Energieversorgungsnetzwerkes. Zum Schutz der übertragenen Multicast-Nachricht wird dabei gemäß dem Standard IEC61850 die Verwendung von digitalen Signaturen vorgeschlagen. Für jede Nachricht wird zum Schutz der Nachricht vor Manipulationen bzw. zum Integritätsschutz auf Seiten des sendenden Feldgerätes eine digitale Signatur berechnet und durch alle empfangenden Feldgeräte identifiziert.

Diese Vorgehensweise hat allerdings den erheblichen Nachteil, dass zur Erstellung der digitalen Signaturen und deren Verifikation durch alle empfangenen Feldgeräte ein erheblicher Berechnungsaufwand besteht und die entsprechenden Feldgeräte über die entsprechenden Ressourcen zur Durchführung derartiger Berechnungen verfügen müssen. Darüber hinaus muss die Verifizierung von empfangenen Multicast-Nachrichten innerhalb vorgegebener Antwortzeiten erfolgen, die wenige Millisekunden umfassen können.

In "A taxonomy of multicast data origin authentication: Issues and solutions" von Y. Challal et al. werden unterschiedliche Möglichkeiten zur Authentisierung von Multicast-Nachrichten behandelt.

In der DE 10 2008 046 563 A1 wird ein Verfahren zur kryptographisch geschützten Übertragung von Daten zwischen Netzwerkknoten eines Netzwerkes offenbart.

Es ist daher eine Aufgabe der vorliegenden Erfindung, ein Verfahren und eine Vorrichtung zum Authentisieren einer Multicast-Nachricht zu schaffen, welches besonders effizient ist und einen geringen Berechnungsaufwand aufweist.

Diese Aufgabe wird erfindungsgemäß durch ein Verfahren mit den im Patentanspruch 1 angegebenen Merkmalen gelöst.

Die Erfindung schafft ein Verfahren zum Authentisieren einer Multicast-Nachricht mit den Schritten:

Berechnen einer Initialisierungs-Hashwertkette durch ein Sendegerät ausgehend von einem Ankerwert des Sendegerätes und Verteilen des letzten Kettengliedes der Initialisierungs-Hashwertkette als Initialisierungsfunktionswert an mindestens ein Empfangsgerät in einer Initialisierungsphase;
Empfangen einer Multicast-Nachricht durch ein Empfangsgerät, das die empfangene Multicast-Nachricht speichert;
Empfangen einer Authentisierungsschlüssel-Freigabenachricht durch das Empfangsgerät,
wobei die Authentisierungsschlüssel-Freigabenachricht einen für die Authentisierung der gespeicherten Multicast-Nachricht von dem Sendegerät freigegebenen kryptographischen Authentisierungsschlüssel enthält;
Berechnen eines kryptographischen Funktionswertes für den in der Authentisierungsschlüssel-Freigabenachricht enthaltenen kryptographischen Authentisierungsschlüssel mittels einer vorgegebenen kryptographischen Funktion durch das Empfangsgerät;
Vergleichen des durch das Empfangsgerät berechneten kryptographischen Funktionswertes des Authentisierungsschlüssels mit dem in der Initialisierungsphase vorab durch das Sendegerät an Empfangsgeräte verteilten Initialisierungsfunktionswert zur Überprüfung der Gültigkeit des in der Authentisierungsschlüssel-Freigabenachricht enthaltenen kryptographischen Authentisierungsschlüssels; und
Authentisieren der von dem Sendegerät stammenden in dem Empfangsgerät gespeicherten Multicast-Nachricht anhand des als gültig erkannten kryptographischen Authentisierungsschlüssels durch das Empfangsgerät.

Das erfindungsgemäße Authentisierungsverfahren bietet den Vorteil, dass es ohne einen zentralen Knoten bzw. ein zentrales Feldgerät zur Schlüsselverwaltung auskommt. Das erfindungsgemäße Verfahren funktioniert somit auch ohne einen Gruppencontroller für eine Gruppe von Feldgeräten.

Das Sendegerät signiert in der Initialisierungsphase den Initialisierungsfunktionswert mit einem privaten kryptographischen Schlüssel und verteilt den signierten Schlüssel an die Empfangsgeräte, welche die Signatur des empfangenen Initialisierungsfunktionswertes jeweils mittels eines öffentlichen Schlüssels verifizieren.

Der in der Authentisierungsschlüssel-Freigabenachricht enthaltene kryptographische Authentisierungsschlüssel ist ein Hashwert, welcher solange durch das in der berechneten Nachrichtenschutz-Hashkette dem in der letzten vorhergehenden Authentisierungsschlüssel-Freigabenachricht enthaltenen Hashwert vorangehenden Kettenglied der Nachrichtenschutz-Hashkette gebildet wird bis der Ankerwert der Nachrichtenschutz-Hashkette erreicht wird.

Ferner wird die in der Initialisierungsphase durch das Sendegerät ausgehend von dem Ankerwert des Sendegerätes berechnete Initialisierungs-Hashkette mittels einer Hashfunktion berechnet, deren Kettenglieder zur Initialisierung weiterer Hashketten, insbesondere der Nachrichtenschutz-Hashkette, vorgesehen sind.

Verschiedene Multicast-Nachrichtentypen sind vorgesehen, wobei das Sendegerät für jeden Multicast-Nachrichtentyp jeweils ausgehend von einem Ankerwert eine zugehörige Nachrichtentyp-Hashkette mittels einer vorgegebenen Hashfunktion für den jeweiligen Multicast-Nachrichtentyp berechnet.

Die verschiedenen Nachrichtentyp-Hashketten werden dabei jeweils ausgehend von einem durch die Initialisierung-Hashkette bereitgestellten Ankerwert berechnet, wobei der Ankerwert durch ein Kettenglied der Initialisierungs-Hashkette gebildet wird.

Der Initialisierungsfunktionswert wird vorzugsweise nach erfolgreicher Verifizierung der Signatur für die nachfolgende Überprüfung der Gültigkeit des in einer Authentisierungsschlüssel-Freigabenachricht enthaltenen kryptographischen Schlüssels durch das Empfangsgerät gespeichert bzw. zwischengespeichert. Die Speicherung des Initialisierungsfunktionswertes kann temporär erfolgen.

Bei einer Ausführungsform des erfindungsgemäßen Verfahrens wird der in der Initialisierungsphase verteilte Initialisierungsfunktionswert durch einen Hash-Funktionswert gebildet, welcher mit einer vorgegebenen Hash-Funktion berechnet wird.

Der durch das Sendegerät in der Initialisierungsphase verteilte Hash-Funktionswert bildet einen Bezugs-Hashwert, welcher das letzte Glied einer durch das Sendegerät berechneten Nachrichtenschutz-Hashwertkette bildet, welche durch das Sendegerät mittels der vorgegebenen Hashfunktion ausgehend von dem Ankerwert des Sendegerätes in der Initialisierungsphase berechnet wird.

Bei einer möglichen Ausführungsform des erfindungsgemäßen Verfahrens sendet das Sendegerät nach Aussenden der Multicast-Nachricht innerhalb eines vorbestimmten konfigurierbaren Zeitraumes eine zugehörige Authentisierungsschlüssel-Freigabenachricht aus, welche den für die Authentisierung der Multicast-Nachricht vorgesehenen Authentisierungsschlüssel enthält.

Bei einer möglichen Ausführungsform des erfindungsgemäßen Verfahrens weist die von dem Empfangsgerät empfangene und gespeicherte Multicast-Nachricht Verwaltungsdaten, Nutzdaten und einen Nachrichten-Authentisierungscode auf.

Bei einer möglichen Ausführungsform des erfindungsgemäßen Verfahrens werden die Nutzdaten der Multicast-Nachricht durch mindestens eine GOOSE (Generic Object Oriented Substation Events)-Nachricht gebildet.

Bei einer möglichen weiteren Ausführungsform des erfindungsgemäßen Verfahrens werden die Nutzdaten der Multicast-Nachricht durch mindestens eine SMV (Sampled Measured Values)-Nachricht gebildet.

Bei einer möglichen Ausführungsform des erfindungsgemäßen Verfahrens wird der in der Multicast-Nachricht enthaltene Nachrichten-Authentisierungscode mittels einer HMAC-Funktion oder mittels einer CBC-MAC-Funktion in Abhängigkeit von den Nutzdaten der Multicast-Nachricht und dem kryptographischen Authentisierungsschlüssel durch das Sendegerät berechnet.

Bei einer möglichen Ausführungsform des erfindungsgemäßen Verfahrens authentisiert das Empfangsgerät die empfangene und gespeicherte Multicast-Nachricht, falls der in der empfangenen Multicast-Nachricht enthaltene Nachrichten-Authentisierungscode mit einem Nachrichten-Authentisierungscode übereinstimmt, welcher durch das Empfangsgerät mittels einer HMAC-Funktion oder mittels einer CBC-MAC-Funktion in Abhängigkeit von den Nutzdaten der Multicast-Nachricht und dem als gültig erkannten kryptographischen Authentisierungsschlüssel, welcher in der Authentisierungsschlüssel-Freigabenachricht enthalten ist, berechnet wird.

Des Weiteren werden mögliche Ausführungsformen des erfindungsgemäßen Authentisierungsverfahrens zur Authentisierung von Multicast-Nachrichten, die zwischen Feldgeräten eines Peer-to-Peer-Systems ausgetauscht werden, unter Bezugnahme auf die beigefügten Figuren beschrieben.

Fig. 1  zeigt schematisch ein Peer-to-System, welches mehrere Feldgeräte aufweist, die Multicast-Nachrichten gemäß dem erfindungsgemäßen Authentisierungsverfahren authentisieren;

Fig. 2  zeigt ein Blockschaltbild eines Ausführungsbeispiels eines Feldgerätes;

Fig. 3  zeigt ein Ablaufdiagramm zur Darstellung eines Ausführungsbeispiels eines erfindungsgemäßen Verfahrens zum Authentisieren einer Multicast-Nachricht;

Fig. 4     zeigt ein Signaldiagramm zur Erläuterung des erfindungsgemäßen Authentisierungsverfahrens;

Fig. 5     zeigt ein mögliches Datenformat einer durch das erfindungsgemäße Verfahren authentisierbaren Multicast-Nachricht.

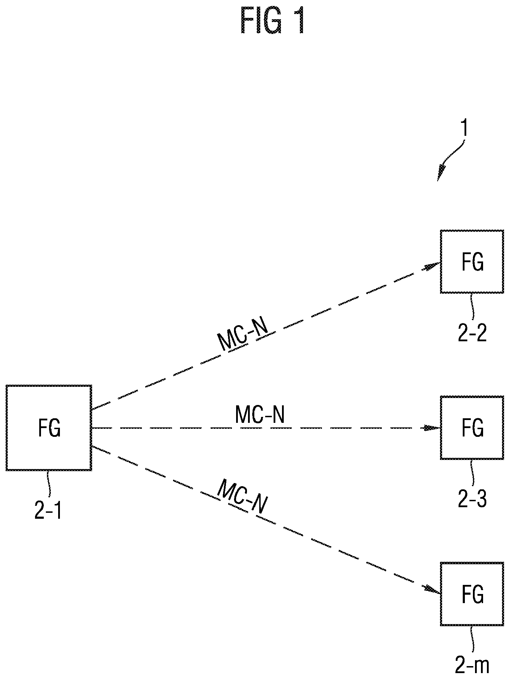

Wie man aus Fig. 1 erkennen kann, kann das erfindungsgemäße Authentisierungsverfahren zum Authentisieren von Multicast-Nachrichten beispielsweise in einem Peer-to-Peer-System 1 eingesetzt werden, welches mehrere Feldgeräte 2-1, 2-2, 2-3... 2-m aufweist. Die Feldgeräte 2-i können miteinander über drahtlose oder auch drahtgebundene Nachrichtenverbindungen kommunizieren, indem sie Nachrichten untereinander austauschen. Bei den Feldgeräten 2-i kann es sich um fest installierte Feldgeräte aber auch um mobile Feldgeräte handeln. Diese Feldgeräte 2-i können als Sendegerät Nachrichten aussenden und als Empfangsgerät Nachrichten empfangen. Wird durch ein Feldgerät, beispielsweise das in Fig. 1 dargestellte Feldgerät 2-1, ein Ereignis erkannt, kann das Feldgerät 2-1 als Sendegerät eine Multicast-Nachricht MC-N an die übrigen Feldgeräte des Peer-to-Peer-Systems 1 senden, wie in Fig. 1 dargestellt. Bei den Feldgeräten 2-i kann es sich beispielsweise um Messgeräte, Überwachungsgeräte oder sonstige Steuergeräte handeln.

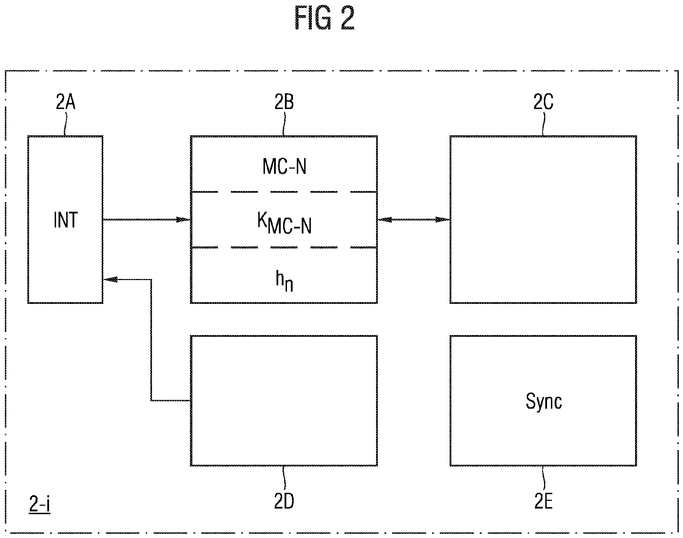

Fig. 2 zeigt ein Blockschaltbild für ein mögliches Ausführungsbeispiel eines in dem in Fig. 1 dargestellten System 1 verwendeten Feldgerätes 2-i. Wie in Fig. 2 dargestellt, weist das Feldgerät 2 mindestens eine Schnittstelle 2a zum Senden und Empfangen von Nachrichten aus. Bei der Schnittstelle 2a kann es sich um eine drahtlose Schnittstelle zum Senden und Empfangen von Funksignalen handeln. Alternativ kann es sich bei der Schnittstelle 2a auch um eine drahtgebundene Schnittstelle zum Anschluss an ein Netzwerk handeln. Die Schnittstelle 2a ist zum Empfang mindestens einer Multicast-Nachricht MC-N geeignet. Ferner kann über die Schnittstelle 2a bei dem in Fig. 2 dargestellten Ausführungsbeispiel eine zeitlich verzögert erhaltene zugehörige Authentisierungsschlüssel-Freigabenachricht KRM (Key Release Message), die von einem anderen Feldgerät des Systems stammt, empfangen werden.

Das Feldgerät 2 enthält, wie in Fig. 2 dargestellt, einen lokalen Datenspeicher 2b. In dem Datenspeicher 2b kann mindestens eine empfangene Multicast-Nachricht MC-N gespeichert bzw. zwischengespeichert werden. Weiterhin wird in dem Datenspeicher 2b eine in einer zugehörigen empfangenen Authentisierungsschlüssel-Freigabenachricht bzw. Key Release Message (KRM) jeweils enthaltener kryptographischer Authentisierungsschlüssel K eine Multicast-Nachricht abgelegt. Der gespeicherte kryptographische Authentisierungsschlüssel K ist dabei für die Authentisierung der jeweiligen Multicast-Nachricht MC-N vorgesehen. Weiterhin kann in dem Datenspeicher 2b des Feldgerätes ein in einer Initialisierungsphase IP an das Feldgerät 2 verteilter Initialisierungsfunktionswert $h_n$ gespeichert sein.

Der Datenspeicher 2b ist mit einer Authentisierungseinheit 2c des Feldgerätes 2 verbunden. Die Authentisierungseinheit berechnet den kryptographischen Funktionswert h(k) für den jeweiligen kryptographischen Authentisierungsschlüssel K, welcher in dem Datenspeicher 2b abgelegt ist, mittels einer vorgegebenen kryptographischen Funktion H. Bei der kryptographische Funktion H kann es sich beispielsweise um eine Hashfunktion handeln. Der berechnete Funktionswert h(K) wird mit dem in dem Datenspeicher 2b gespeicherten Initialisierungsfunktionswert $h_n$ zur Prüfung der Gültigkeit des kryptographischen Authentisierungsschlüssels K verglichen. Wird der kryptographische Authentisierungsschlüssel K als gültig erkannt, wird die zugehörige gespeicherte Multicast-Nachricht MC-N anschließend anhand des als gültig erkannten kryptographischen Authentisierungsschlüssels K durch die Authentisierungseinheit 2c des Feldgerätes 2 authentisiert.

Wie in Fig. 2 dargestellt, kann das Feldgerät 2 zusätzlich eine Berechnungseinheit 2d aufweisen, die einen Initialisierungsfunktionswert mittels einer kryptographischen Funktion H berechnet, wobei der berechnete Initialisierungsfunktionswert in einer Initialisierungsphase IP des Systems 1 mit einem privaten Schlüssel $K_{priv}$ des Feldgerätes 2 signiert an andere Feldgeräte verteilt wird. Dieser private Schlüssel $K_{priv}$ kann in einem weiteren zugriffssicheren Datenspeicher des Feldgerätes 2 konfigurierbar abgelegt sein. Nach Aussenden einer Multicast-Nachricht MC-N durch das in Fig. 2 dargestellte Feldgerät 2 über die Schnittstelle 2a an andere Feldgeräte des Systems 1 sendet das Feldgerät 2 zeitlich verzögert über die Schnittstelle 2a eine zugehörige Authentisierungsschlüssel-Freigabenachricht KRM an die anderen Feldgeräte. Diese Authentisierungsschlüssel-Freigabenachricht bzw. Key Release Message enghält dabei mindestens einen für die Authentisierung der Multicast-Nachricht MC-N von dem Feldgerät 2 freigegebenen Authentisierungsschlüssel k. Die zeitliche Verzögerung zwischen der ausgesendeten Multicast-Nachricht MC-N und der anschließend ausgesendeten zugehörigen Authentisierungsschlüssel-Freigabenachricht KRM ist bei einer möglichen Ausführungsform konfigurierbar und kann von einer Priorität der jeweiligen Multicast-Nachricht bzw. des Multicast-Nachrichtentyps abhängen.

Bei einer möglichen Ausführungsform wird die Multicast-Nachricht MC-N durch eine Berechnungseinheit des Feldgerätes 2 nach Detektion eines bestimmten Ereignisses automatisch generiert und ausgesendet. Zur Detektion eines Ereignisses kann das in Fig. 2 dargestellte Feldgerät 2 zusätzlich über Sensoren verfügen. Bei einer weiteren möglichen Ausführungsform wird ein Ereignis anhand einer von einem anderen Knoten bzw. Feldgerät empfangenen Nachricht erkannt. Die von einem Feldgerät 2 bei Erkennen eines Ereignisses ausgesendete Multicast-Nachricht MC-N weist Verwaltungsdaten (Header), Nutzdaten und einen Nachrichtenauthentisierungscode MAC auf. Dabei wird der Authentisierungscode in Abhängigkeit von den Nutzdaten der Multicast-Nachricht MC-N und dem kryptographischen Authentisierungsschlüssel K durch die Berechnungseinheit 2d des Feldgerätes 2 berechnet. Bei der ausgesendeten Multicast-Nachricht MC-N handelt es sich somit um ein Datenpaket in einem bestimmten Datenformat.

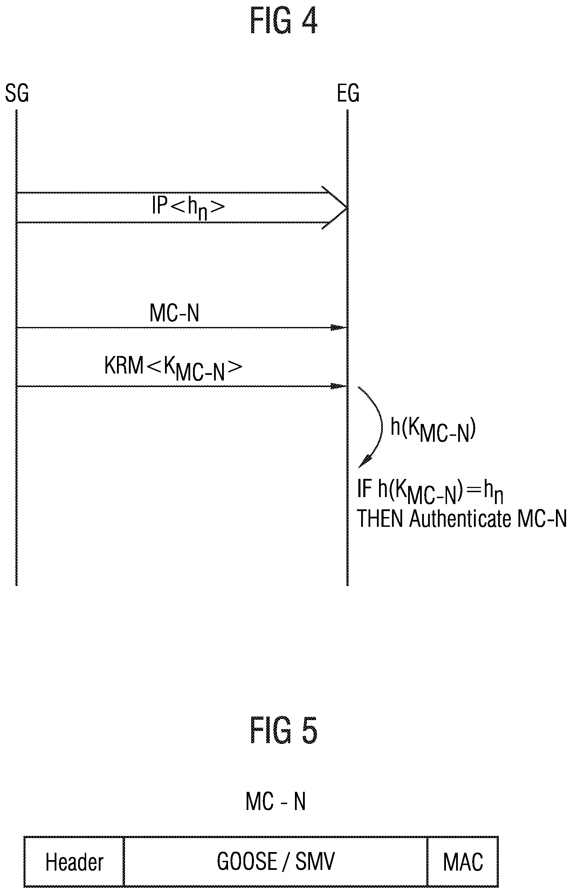

Fig. 5 zeigt ein mögliches Beispiel für ein Datenformat einer von dem Feldgerät 2 ausgesendeten Multicast-Nachricht MC-N. Die Multicast-Nachricht umfasst wie in Fig. 5 dargestellt Header- bzw. Verwaltungsdaten sowie Nutzdaten bzw. Payload-Daten. Weiterhin umfasst die Multicast-Nachricht MC-N den erzeugten Nachrichten-Authentisierungscode MAC, welcher in Abhängigkeit von den Nutzdaten der Multicast-Nachricht und dem kryptographischen Authentisierungsschlüssel k durch die Berechnungseinheit 2d des Feldgerätes 2 berechnet wird. Bei einer möglichen Ausführungsform wird die in der Multicast-Nachricht enthaltenen Nutzdaten ihrerseits eine Nachricht, insbesondere eine GOOSE (Generic Object Oriented Substation Events)-Nachricht oder eine SMV (Sampled Measured Values)-Nachricht.

Bei einer möglichen Ausführungsform des Feldgerätes 2 verfügt das Feldgerät 2 ferner, wie in Fig. 2 dargestellt, über eine Synchronisationseinheit 2e, mit welcher das Feldgerät 2 mit anderen Feldgeräten des Systems 1 synchronisiert wird. Bei einer möglichen Ausführungsform weist das Feldgerät eine Einheit zum Empfangen einer NTP (Network Time Protocol)-Synchronisationsnachricht auf. Bei einer alternativen Ausführungsform weist das Feldgerät 2 eine Einheit zum Empfangen einer MMS-Nachricht auf. In einer weiteren alternativen Ausführungsform weist das Feldgerät 2 eine Einheit zum Empfangen einer IEEE 1588 Synchronisationsnachricht auf.

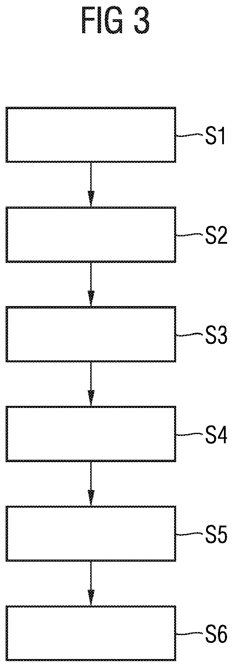

Fig. 3 zeigt ein Ablaufdiagramm zur Darstellung eines Ausführungsbeispiels des erfindungsgemäßen Verfahrens zum Authentisieren einer Multicast-Nachricht MC-N.

Das System 1, wie es in Fig. 1 dargestellt wird, wird zunächst in einer Initialisierungsphase IP in Schritt S1 eine Initialisierungs-Hashkette ausgehend von einem vorbestimmten Ankerwert des jeweiligen Feldgerätes berechnet. Anschließend wird das letzte Kettenglied der berechneten Initialisierungs-Hashkette als Initialisierungsfunktionswert an mindestens ein Empfangsgerät bzw. die übrigen Feldgeräte verteilt. Dabei signiert das Sendegerät bzw. sendende Feldgerät in der Initialisierungsphase IP einen Initialisierungsfunktionswert $h_n$ mit einem privaten kryptographischen Schlüssel $K_{priv}$ und verteilt den signierten Initialisierungsfunktionswert $h_n$, welcher das letzte Kettenglied der Initialisierungs-Hashkette bildet, an die übrigen Feldgeräte. Bei erfolgreicher Verifizierung eines Initialisierungsfunktionswertes durch die übrigen Feldgeräte wird der verteilte Initialisierungsfunktionswert $h_n$ in deren jeweils vorhandenen lokalen Datenspeicher 2b abgelegt. Der Initialisierungsfunktionswert wird somit nach erfolgreicher Verifizierung der Signatur für die nachfolgende Überprüfung der Gültigkeit des in einer Authentisierungsschlüssel-Freigabenachricht KRM enthaltenen kryptographischen Schlüssels k durch die übrigen Feldgeräte jeweils in ihrem Datenspeicher 2b gespeichert. Bei einer bevorzugten Ausführungsform wird der in der Initialisierungsphase IP verteilte Initialisierungsfunktionswert $h_n$ durch einen Hash-Funktionswert gebildet, welcher mit einer vorgegebenen Hashfunktion H berechnet wird. Der durch das sendende Feldgerät in der Initialisierungsphase IP verteilte Hash-Funktionswert $h_n$ bildet einen Bezugs-Hashwert, welcher das letzte Glied einer durch das sendende Feldgerät berechneten Nachrichtenschutz-Hashkette bildet. Diese Nachrichtenschutz-Hashkette wird durch das sendende Feldgerät bzw. Sendegerät mittels der vorgegebenen Hashfunktion H ausgehend von dem Ankerwert des Sendegerätes in der Initialisierungsphase IP berechnet. Jedes Feldgerät 2-i des Systems 1 verfügt vorzugsweise über einen eigenen Ankerwert.

Nachdem ein Feldgerät 2-i in Schritt S1 von einem anderen Feldgerät einen Initialisierungsfunktionswert in der Initialisierungsphase IP erhalten hat und nach erfolgreicher Verifizierung diesen Wert in seinem lokalen Datenspeicher 2b abgelegt hat, empfängt das Feldgerät 2 in einem weiteren Schritt S2 eine Multicast-Nachricht MC-N, welche von einem anderen Feldgerät stammt, und speichert diese empfangene Multicast-Nachricht MC-N ebenfalls in seinem lokalen Datenspeicher 2b ab.

Das Feldgerät, von dem die Multicast-Nachricht MC-N ausgesendet wurde, sendet innerhalb eines vorbestimmten konfigurierbaren Zeitraumes Δt eine zugehörige Authentisierungsschlüssel-Freigabenachricht bzw. Key Release Management-Nachricht aus, welche den für die Authentisierung der Multicast-Nachricht MC-N vorgesehenen Authentisierungsschlüssel K enthält. Die Authentisierungsschlüssel-Freigabenachricht KRM wird durch das empfangene Feldgerät 2 in Schritt S3 empfangen. Die empfangene Authentisierungsschlüssel-Freigabenachricht KRM enthält den für die Authentisierung der bereits in dem Datenspeicher 2 zwischengespeicherten Multicast-Nachricht MC-N von dem sendenden Feldgerät freigegebenen kryptographischen Authentisierungsschlüssel K.

In einem weiteren Schritt S4 wird durch die Authentisierungseinheit 2c des empfangenen Feldgerätes ein kryptographischer Funktionswert h(K) für den in der empfangenen Authentisierungsschlüssel-Freigabenachricht KRM enthaltenen kryptographischen Authentisierungsschlüssel K mittels einer vorgegebenen kryptographischen Funktion H berechnet. Bei einer möglichen Ausführungsform wird die Authentisierungseinheit 2c über eine Konfigurationsschnittstelle mit einer entsprechenden Funktion vorkonfiguriert.

In einem weiteren Schritt S5 wird durch die Authentisierungseinheit 2c des Feldgerätes 2 der durch das empfangene Feldgerät 2 berechnete kryptographische Funktionswert h(K) des Authentisierungsschlüssels K mit dem in der Initialisierungsphase IP vorab durch das sendende Feldgerät an das empfangene Feldgerät 2 verteilten Initialisierungs-

funktionswert $h_n$ zur Überprüfung der Gültigkeit des in der Authentisierungsschlüssel-Freigabenachricht KRM enthaltenen kryptographischen Authentisierungsschlüssels K verglichen.

Wird der kryptographische Authentisierungsschlüssel K durch das empfangene Feldgerät als gültig erkannt, erfolgt in einem weiteren Schritt S6 die Authentisierung der von dem sendenden Feldgerät stammenden in dem empfangenen Feldgerät gespeicherten Multicast-Nachricht MC-N. Diese authentisierte Multicast-Nachricht MC-N wird dann weiter verarbeitet bzw. ausgewertet.

Bei einer möglichen Ausführungsform wird der in der Multicast-Nachricht MC-N enthaltene Nachrichten-Authentisierungscode MAC mittels einer HMAC-Funktion in Abhängigkeit von den Nutzdaten der Multicast-Nachricht MC-N mit dem kryptographischen Authentisierungsschlüssel K durch das sendende Feldgerät berechnet. Mit der HMAC-Funktion wird bei einer möglichen Ausführungsform ein Integritätsprüfwert bzw. Integrity Check Value ICV berechnet. Bei einer möglichen Ausführungsform weist die HMAC-Funktion folgende Form auf:

$$\mathrm{HMAC(H,N)\ =\ H((K\ XOR\ opad)\,||\,H((K\ XOR\ ipad)\,||\,N));}$$

wobei N die Nachricht ist, die als Nutzdaten in der Multicast-Nachricht MC-N enthalten ist.

Bei dieser Variante speichert das empfangene Feldgerät die empfangenen Nachrichten zur Verifizierung ihrer Authentizität ab.

Bei einer weiteren Variante wird der Nachrichten-Authentisierungscode MAC wie folgt berechnet:

$$\mathrm{MAC(K,N)\ =\ H(K\,||\,H(N)).}$$

Diese Variante erlaubt die Vorberechnung des Hashwertes der Nachricht H(N).

Bei dieser Ausführungsform ist es nur notwendig, den Hashwert und nicht die gesamte Nachricht N zur Verifizierung von deren Authentizität zwischenzuspeichern.

Das empfangene Feldgerät authentisiert die empfangene und gespeicherte Multicast-Nachricht MC-N, falls der in der empfangenen Multicast-Nachricht MC-N enthaltene Nachrichten-Authentisierungscode MAC mit dem Nachrichten-Authentisierungscode MAC' übereinstimmt, welcher durch das Empfangsgerät mittels der Funktion, insbesondere einer HMAC-Funktion oder einer CBC-MAC-Funktion, in Abhängigkeit von den Nutzdaten der Multicast-Nachricht und dem als gültig erkannten kryptographischen Authentisierungsschlüssel K, welcher in der Authentisierungsschlüssel-Freigabenachricht KRM enthalten, berechnet wird.

Der in der Authentisierungsschlüssel-Freigabenachricht KRM enthaltene kryptographische Authentisierungsschlüssel K bildet dabei vorzugsweise einen Hashwert, welcher solange durch das in der berechneten Nachrichtenschutz-Hashkette dem in der letzten vorhergehenden Authentisierungsschlüssel-Freigabenachricht enthaltenen Hashwert $h_n$ vorangehenden Kettenglied $h_{n-1}$ der Nachrichtenschutz-Hashkette gebildet wird, bis der Ankerwert der Nachrichtenschutz-Hashkette erreicht wird.

In der Initialisierungsphase IP wird durch das sendende Feldgerät bzw. Sendegerät ausgehend von dem Ankerwert des sendenden Felgerätes die Initialisierungs-Hashkette mittels einer Hashfunktion H berechnet, deren Kettenglieder $h_i$ bei einer möglichen Ausführungsform zur Initialisierung weiterer Hashketten, insbesondere der Nachrichtenschutz-Hashkette, vorgesehen sind.

Bei einer möglichen Ausführungsform des erfindungsgemäßen Verfahrens sind verschiedene Multicast-Nachrichtentypen vorgesehen. Dabei berechnet ein sendendes Feldgerät für jeden Multicast-Nachrichtentyp jeweils ausgehend von einem Ankerwert eine zugehörige Nachrichtentyp-Hashkette mittels einer vorgegebenen Hashfunktion für den jeweiligen Multicast-Nachrichtentyp. Die verschiedenen Nachrichtentyp-Hashketten werden jeweils ausgehend von einem durch die Initialisierungs-Hashkette bereitgestellten Ankerwert berechnet, wobei der Ankerwert jeweils durch ein Kettenglied der Initialisierungs-Hashkette gebildet wird. Die in dem System 1 ausgetauschten Multicast-Nachrichten MC-N können verschiedene Multicast-Nachrichtentypen MC-N-TYP aufweisen, die unterschiedliche Prioritäten besitzen. Bei einer möglichen Ausführungsform ist die konfigurierbare Zeitdauer $\Delta t$ zwischen dem Aussenden einer Multicast-Nachricht MC-N und der dazu gehörigen Authentisierungsschlüssel-Freigabenachricht KRM umso kürzer je höher die Priorität des jeweiligen Multicast-Nachrichtentyps der Multicast-Nachricht ist. Beispielsweise kann bei einer möglichen Ausführungsform verschiedene Prioritäten für schnelle Nachrichten (fast messages) Nachrichten mit mittlerer Geschwindigkeit (medium speed messages) und für Nachrichten mit niedriger notwendiger Übertragungsgeschwindigkeit (low speed messages) definiert sein. Schnelle bzw. kritische Nachrichten sind dabei die zu übertragenden Nachrichten mit einer hohen Priorität, das heißt bei derartigen Nachrichten ist die Zeitdauer zwischen dem Aussenden der entsprechenden Multicast-Nachricht MC-N und der dazugehörigen Authentisierungsschlüssel-Freigabenachricht KRM gering und kann beispielsweise weniger als 5 Millisekunden betragen.

In Fig. 4 dient nochmals zur Verdeutlichung des erfindungsgemäßen Verfahrens. Es wird in einer Initialisierungsphase IP mittels eines sendenden Feldgerätes bzw. Sendegerätes SG eine Initialisierungs-Hashkette ausgehend von einem Ankerwert des Sendegerätes SG berechnet und anschließend das letzte Kettenglied der Initialisierungs-Hashkette als Initialisierungsfunktionswert $h_n$ an mindestens ein Empfangsgerät EG verteilt. In einer Betriebsphase des Systems sendet das Feldgerät SG, beispielsweise bei Detektion eines Ereignisses, eine Multicast-Nachricht MC-N an die übrigen empfangenen Feldgeräte EG. Nach einer bestimmten konfigurierbaren Zeitverzögerung $\Delta t$ sendet das Sendegerät SG weiterhin eine Authentisierungsschlüssel-Freigabenachricht KRM (Key Release Message) an die übrigen Feldgeräte, wobei die Authentisierungsschlüssel-Freigabenachricht KRM einen für die Authentisierung der zuvor gesendeten Multicast-Nachricht MC-N von dem Sendegerät SG freigegebenen kryptographischen Authentisierungsschlüssel K enthält. Durch das Empfangsgerätes EG wird, wie in Fig. 4 dargestellt, ein kryptographischer Funktionswert h(k) für den in der Authentisierungsschlüssel-Freigabenachricht KRM enthaltenen kryptographischen Authentisierungsschlüssel K mittels einer vorgegebenen kryptographischen Funktion H berechnet. Der durch das Empfangsgerät EG berechnete kryptographische Funktionswert h(k) des Authentisierungsschlüssels K wird anschließend mit dem in der Initialisierungsphase IP vorab durch das Empfangsgerät erhaltenen Initialisierungsfunktionswert $h_n$ zur Überprüfung der Gültigkeit des in der Authentisierungsschlüssel-Freigabenachricht KRM enthaltenen kryptographischen Authentisierungsschlüssels K verglichen. Falls die beiden verglichenen Werte identisch bzw. weitgehend identisch sind, erfolgt anschließend eine Authentisierung der von dem Sendegerät SG stammenden in dem Empfangsgerät EG gespeicherten Multicast-Nachricht MC-N. Die authentisierte Nachricht MC-N kann anschließend ausgewertet werden.

Bei dem erfindungsgemäßen Verfahren wird ein Integritätsschutz für Broadcast- bzw. Multicast mehrerer Nachrichten unter Verwendung von Hashketten durch Einsatz von digitalen Signaturen erreicht. Das erfindungsgemäße Verfahren kann beispielsweise mit einem Energiesteuerprotokoll für Energiefeldgerätes, beispielsweise eines Schutzstations-Controllers, eingesetzt werden.

In einer Variante des erfindungsgemäßen Verfahrens wird eine Broadcast-Multicast-Hashkette an eine bestimmte Klasse bzw. einen bestimmten Typ von Nachrichten gebunden. Der Typ einer Steuernachricht kann durch das sendende Feldgerät als Teil der Initialisierungsinformation spezifiziert werden. Dies erlaubt es einem empfangenen Feldgerät festzustellen, ob eine Hashkette tendenziell für Steuerbefehle des empfangenden Feldgeräts relevant ist. Wenn dies der Fall ist, speichert das empfangende Feldgerät bzw. der Empfänger die Initialisierungsinformation. Bei einer möglichen Ausführungsform verifiziert das empfangene Feldgerät bzw. Empfangsgerät, ob die empfangene Steuernachricht bzw. Multicast-Nachrichten tatsächlich dem angekündigten Typ bzw. der angekündigten Klasse entsprechend einer Hashketten-Initialisierungsinformation entspricht.

Bei einer möglichen Ausführungsform des erfindungsgemäßen Verfahrens bilden Kettenglieder einer Initialisierungs-Hashkette jeweils Ankerwerte für weitere Hashketten, insbesondere für Nachrichtenschutz-Hashketten. Dies erlaubt es, verschiedene Hashketten für unterschiedliche Nachrichtenklassen bzw. Nachrichtentypen vorzusehen. Ferner können auf diese Weise Hashketten ermittelt werden, die oft bereitgestellt werden müssen, da aufgrund der hohen Priorität des jeweiligen Nachrichtentyps die Kettenglieder rasch konsumiert bzw. verbraucht werden.

Bei einer möglichen Ausführungsform des Systems 1 führen die verschiedenen Feldgeräte 2 eine lokale Registrierung für verschiedene Ereignisse durch, das heißt jedes Feldgerät 2 entscheidet für sich, welche der empfangenen Multicast-Nachrichten durch das jeweilige Feldgerät verarbeitet werden und welche Multicast-Nachrichten MC-N durch das jeweilige Feldgerät 2 verworfen werden. Bei einer möglichen Ausführungsform des Systems 1 werden verschiedene Nachrichten zu Nachrichtengruppen zusammengefasst, die jeweils unterschiedliche Prioritäten aufweisen können. Das sendende Feldgerät, das eine Multicast-Nachricht MC-N aussendet, kann dann eine Hashkette in einem spezifischen Nachrichten-Cluster bzw. eine bestimmte Nachrichtengruppe binden. Dies ist möglich beispielsweise indem ein Cluster-Kriterium in die dargestellte Schlüsselinformation beinhaltet wird. Weiterhin ist es möglich, dass das Sendefeldgerät diese Information bei der Verteilung des Ketten-Ankerwertes bereitstellt.

Bei einer möglichen Variante wird ein Befehl bzw. ein in einer Multicast-Nachricht MC-N übertragener Befehl lediglich ausgeführt, falls er im Kontext der zuvor ausgeführten Befehle bzw. Steuerdaten und der enthaltenen Messdaten als plausibel eingeschätzt wird.

Bei einer möglichen Variante des Systems 1 sendet jedes Feldgerät eine Hashkette zum Schlüsselmaterial, um Nachrichtenschutz bereitzustellen, und eine zweite Hashkette, um Ankerwerte für weitere Hashketten bereitzustellen. Dadurch kann die Anzahl von asymmetrischen kryptographischen Operationen reduziert werden.

Bei einer möglichen Ausführungsform des Systems 1 verfügt jedes Feldgerät 2 über ein aus einem öffentlichen und aus einem privaten Schlüssel bestehendes Schlüsselpaar. Hierbei ist der öffentliche Schlüssel zertifiziert und für die übrigen Feldgeräte verfügbar. Alternativ kann das Zertifikat als Teil des Protokolls übertragen werden. Bei einer möglichen Ausführungsform des Systems 1 hängt die Länge einer berechneten Hashkette von dem vorgesehenen Zeitintervall $\Delta t$ zwischen dem Übertragen der Multicast-Nachricht MC-N und der Schlüsselfreigabe-Nachricht KRM ab. Je kürzer dieses Zeitintervall $\Delta t$ ist, desto mehr Kettenglieder werden für die jeweilige Hashkette berechnet.

**Patentansprüche**

1. Verfahren zum Authentisieren einer Multicast-Nachricht mit den folgenden Schritten:

   (a) Berechnen (S1) einer Initialisierungs-Hashkette durch ein Sendegerät ausgehend von einem Ankerwert des Sendegerätes und Verteilen des letzten Kettengliedes der Initialisierungs-Hashkette als Initialisierungsfunktionswert an mindestens ein Empfangsgerät in einer Initialisierungsphase (IP),
   wobei das mindestens eine Empfangsgerät ein Feldgerät ist;
   (b) Empfangen (S2) einer Multicast-Nachricht (MC-N) durch ein Empfangsgerät, das die empfangene Multicast-Nachricht (MC-N) speichert;
   (c) Empfangen (S3) einer Authentisierungsschlüssel-Freigabenachricht (KRM) von dem Sendegerät durch das Empfangsgerät,
   wobei die Authentisierungsschlüssel-Freigabenachricht (KRM) einen für die Authentisierung der gespeicherten Multicast-Nachricht (MC-N) von dem Sendegerät freigegebenen kryptographischen Authentisierungsschlüssel (K) enthält;
   (d) Berechnen (S4) eines kryptographischen Funktionswertes h(K) für den in der Authentisierungsschlüssel-Freigabenachricht (KRM) enthaltenen kryptographischen Authentisierungsschlüssel (K) mittels einer vorgegebenen kryptographischen Funktion (H) durch das Empfangsgerät;
   (e) Vergleichen (S5) des durch das Empfangsgerät berechneten kryptographischen Funktionswertes h(K) des Authentisierungsschlüssels (K) mit den in der Initialisierungsphase (IP) vorab durch das Sendegerät an Empfangsgeräte verteilten Initialisierungsfunktionswert ($h_n$) zur Überprüfung der Gültigkeit des in der Authentisierungsschlüssel-Freigabenachricht (KRM) enthaltenen kryptographischen Authentisierungsschlüssels (K); und
   f) Authentisieren (S6) der von dem Sendegerät stammenden in dem Empfangsgerät gespeicherten Multicast-Nachricht (MC-N) anhand des als gültig erkannten kryptographischen Authentisierungsschlüssels (K) durch das Empfangsgerät;

   wobei das Sendegerät in der Initialisierungsphase (IP) den Initialisierungsfunktionswert ($h_n$) mit einem privaten kryptographischen Schlüssel ($K_{priv}$) signiert und an Empfangsgeräte verteilt, welche die Signatur des empfangenen Initialisierungsfunktionswertes ($h_n$) jeweils mittels eines öffentlichen Schlüssels ($K_{pub}$) verifizieren,
   wobei der Initialisierungsfunktionswert ($h_n$) nach erfolgreicher Verifizierung der Signatur für die nachfolgende Überprüfung der Gültigkeit des in einer Authentisierungsschlüssel-Freigabenachricht (KRM) enthaltenen kryptographischen Schlüssels (K) durch das Empfangsgerät gespeichert wird;
   wobei der in der Authentisierungsschlüssel-Freigabenachricht (KRM) enthaltene kryptographische Authentisierungsschlüssel (K) ein Hashwert ist, welcher solange durch das in der berechneten Nachrichtenschutz-Hashkette dem in der letzten vorhergehenden Authentisierungsschlüssel-Freigabenachricht enthaltenen Hashwert ($h_n$) vorangehenden Kettenglied ($h_{n-1}$) der Nachrichtenschutz-Hashkette gebildet wird bis der Ankerwert der Nachrichtenschutz-Hashkette erreicht wird;
   wobei die in der Initialisierungsphase (IP) durch das Sendegerät ausgehend von dem Ankerwert des Sendegerätes berechnete Initialisierungs-Hashkette mittels einer Hashfunktion (H) berechnet wird, deren Kettenglieder zur Initialisierung weitere Hashketten, insbesondere der Nachrichtenschutz-Hashkette, vorgesehen sind;
   wobei verschiedene Multicast-Nachrichtentypen (MC-N-TYP) vorgesehen sind, wobei das Sendegerät für jeden Multicast-Nachrichtentyp jeweils ausgehend von einem Ankerwert eine zugehörige Nachrichtentyp-Hashkette mittels einer vorgegebenen Hashfunktion (H) für den jeweiligen Multicast-Nachrichtentyp (MC-N-TYP) berechnet;
   wobei die verschiedenen Nachrichtentyp-Hashketten jeweils ausgehend von einem durch die Initialisierung-Hashkette bereitgestellten Ankerwert berechnet werden, wobei der Ankerwert durch ein Kettenglied der Initialisierungs-Hashkette gebildet wird.

2. Verfahren nach Anspruch 1,
   wobei der in der Initialisierungsphase (IP) verteilte Initialisierungsfunktionswert ($h_n$) durch einen Hash-Funktionswert gebildet wird, welcher mit einer vorgegebenen Hash-Funktion (H) berechnet wird.

3. Verfahren nach Anspruch 2,
   wobei der durch das Sendegerät in der Initialisierungsphase (IP) verteilte Hash-Funktionswert ($h_n$) einen Bezugs-Hashwert bildet, welcher das letzte Glied einer durch das Sendegerät berechneten Nachrichtenschutz-Hashkette bildet, welche durch das Sendegerät mittels der vorgegebenen Hashfunktion (H) ausgehend von dem Ankerwert des Sendegerätes in der Initialisierungsphase (IP) berechnet wird.

4. Verfahren nach Anspruch 1 bis 3,

wobei das Sendegerät nach Aussenden der Multicast-Nachricht (MC-N) innerhalb eines vorbestimmten konfigurierbaren Zeitraumes (Δt) eine zugehörige Authentisierungsschlüssel-Freigabenachricht (KRM) aussendet, welche den für die Authentisierung der Multicast-Nachricht (MC-N) vorgesehenen Authentisierungsschlüssel (K) enthält.

5. Verfahren nach Anspruch 1 bis 4,
wobei die von der Empfangsgerät empfangene und gespeicherte Multicast-Nachricht (MC-N) Verwaltungsdaten (Header),
Nutzdaten und
einen Nachrichten-Authentisierungscode (MAC) aufweist.

6. Verfahren nach Anspruch 5,
wobei die Nutzdaten der Multicast-Nachricht (MC-N)durch eine GOOSE (Generic Object Oriented Substation Events)-Nachricht oder eine SMV (Sample Measure Values)-Nachricht gebildet werden.

7. Verfahren nach Anspruch 5 oder 6,
wobei der in der Multicast-Nachricht (MC-N)enthaltene Nachrichten-Authentisierungscode (MAC) mittels einer HMAC-Funktion in Abhängigkeit von den Nutzdaten der Multicast-Nachricht (MC-N)und dem kryptographischen Authentisierungsschlüssel (K) durch das Sendegerät berechnet wird.

8. Verfahren nach Anspruch 7,
wobei das Empfangsgerät die empfangene und gespeicherte Multicast-Nachricht (MC-N)authentisiert, falls der in der empfangenen Multicast-Nachricht (MC-N)enthaltene Nachrichten-Authentisierungscode (MAC) mit einem Nachrichten-Authentisierungscode (MAC') übereinstimmt, welcher durch das Empfangsgerät mittels einer HMAC-Funktion in Abhängigkeit von den Nutzdaten der Multicast-Nachricht (MC-N)und dem als gültig erkannten kryptographischen Authentisierungsschlüssel (K), welcher in der Authentisierungsschlüssel-Freigabenachricht (KRM) enthalten ist, berechnet wird.

**Claims**

1. Method for authenticating a multicast message, with the following steps:

   (a) Calculation (S1) of an initialisation hash chain by a transmitter based on an anchor value of the transmitter and distribution of the last chain element of the initialisation hash chain as an initialisation function value to at least one receiver in an initialisation phase (IP),
   wherein the at least one receiver is a field device;
   (b) Receipt (S2) of a multicast message (MC-N) by a receiver, which stores the received multicast message (MC-N);
   (c) Receipt (S3) of an authentication key release message (KRM) from the transmitter by the receiver,
   wherein the authentication key release message (KRM) contains a cryptographic authentication key (K) released by the transmitter for the authentication of the stored multicast message (MC-N);
   (d) Calculation (S4) of a cryptographic function value h(K) for the cryptographic authentication key (K) contained in the authentication key release message (KRM) by means of a predetermined cryptographic function (H) by the receiver;
   (e) Comparison (S5) of the cryptographic function value h(K) of the authentication key (K) calculated by the receiver with the initialisation function value previously distributed by the transmitter to receivers in the initialisation phase (IP) for checking the validity of the cryptographic authentication key (K) contained in the authentication key release message; and
   f) Authentication (S6) by the receiver of the multicast message (MC-N) originating from the transmitter stored in the receiver on the basis of the cryptographic authentication key (K) recognised as valid;

   wherein in the initialisation phase (IP) the transmitter signs the initialisation function value $(h_n)$ with a private cryptographic key $(K_{priv})$ and distributes it to receivers, which each verify the signature of the received initialisation function value $(h_n)$ by means of a public key $(K_{pub})$,
   wherein, after successful verification of the signature, the initialisation function value $(h_n)$ is stored by the receiver for subsequent checking of the validity of the cryptographic key (K) contained in an authentication key release message (KRM);
   wherein the cryptographic authentication key (K) contained in the authentication key release message (KRM) is a hash value which is formed by the chain element ($h_{n-1}$) of the message protection hash chain preceding the hash value ($h_n$) contained in the last preceding authentication key release message until such time as the anchor value of the message protection hash chain is reached;
wherein the initialisation hash chain calculated in the initialisation phase (IP) by the transmitter on the basis of the anchor value of the transmitter is calculated by means of a hash function (H), the chain elements of which are provided for initialisation of further hash chains, especially of the message protection hash chain;
wherein different multicast message types (MC-N-TYP) are provided, wherein the transmitter for each multicast message type, based in each case on an anchor value, calculates an associated message type hash chain by means of a predetermined hash function (H) for the respective multicast message type (MC-N-TYP);
wherein the different message type hash chains are calculated in each case on the basis of an anchor value provided by the initialisation hash chain, wherein the anchor value is formed by a chain element of the initialisation hash chain.

2. Method according to claim 1,
wherein the initialisation function value ($h_n$) distributed in the initialisation phase (IP) is formed by a hash function value which is calculated with a predetermined hash function (H).

3. Method according to claim 2,
wherein the hash function value ($h_n$) distributed by the transmitter in the initialisation phase (IP) forms a reference hash function value, which forms the last element of a message protection hash chain calculated by the transmitter, which is calculated in the initialisation phase (IP) by means of the predetermined hash function (H) based on the anchor value of the transmitter.

4. Method according to claim 1 to 3,
wherein the transmitter, after transmitting the multicast message (MC-N), transmits an associated authentication key release message (KRM) within a predetermined configurable period of time ($\Delta$t), which contains the authentication key (K) provided for the authentication of the multicast message (MC-N).

5. Method according to claim 1 to 4,
wherein the multicast message (MC-N) received and stored by the receiver comprises
header data,
payload data and
a message authentication code (MAC).

6. Method according to claim 5,
wherein the payload data of the multicast message (MC-N) is formed by a GOOSE (Generic Object Oriented Substation Events) message or an SMV (Sample Measure Values) message.

7. Method according to claim 5 or 6,
wherein the message authentication code (MAC) contained in the multicast message (MC-N) is calculated by the transmitter by means of an HMAC function depending on the payload data of the multicast message (MC-N) and the cryptographic authentication key (K).

8. Method according to claim 7,
wherein the receiver authenticates the received and stored multicast message (MC-N) if the message authentication code (MAC) stored in the received multicast message (MC-N) corresponds to a message authentication code (MAC'), which is calculated by the receiver by means of an HMAC function depending on the payload data of the multicast message (MC-N) and the cryptographic authentication key (K) recognised as valid, which is contained in the authentication key release message (KRM).

**Revendications**

1. Procédé d'authentification d'un message multidiffusé, comportant les étapes suivantes :

(a) calcul (S1) d'une chaîne de hachage d'initialisation par un appareil émetteur à partir d'une valeur d'ancrage de l'appareil émetteur et distribution du dernier maillon de chaîne de la chaîne de hachage d'initialisation en tant que valeur de fonction d'initialisation à au moins un appareil récepteur dans une phase d'initialisation (IP), l'au moins un appareil récepteur étant un appareil de terrain ;

(b) réception (S2) d'un message multidiffusé (MC-N) par un appareil récepteur qui sauvegarde le message multidiffusé reçu (MC-N) ;

(c) réception (S3) d'un message de validation de clé d'authentification (KRM) de l'appareil émetteur par l'appareil récepteur, le message de validation de clé d'authentification (KRM) contenant une clé d'authentification cryptographique (K) validée par l'appareil émetteur pour l'authentification du message multidiffusé reçu (MC-N) ;

(d) calcul (S4) d'une valeur de fonction cryptographique h(K) pour la clé d'authentification cryptographique (K) contenue dans le message de validation de clé d'authentification (KRM) au moyen d'une fonction cryptographique donnée (H) par l'appareil récepteur ;

(e) comparaison (S5) de la valeur de fonction cryptographique h(K) de la clé d'authentification (K) calculée par l'appareil récepteur avec la valeur de fonction d'initialisation ($h_n$) distribuée préalablement, à la phase d'initialisation (IP), par l'appareil émetteur à l'appareil récepteur pour la vérification de la validité de la clé d'authentification cryptographique (K) contenue dans le message de validation de clé d'authentification (KRM) ; et

f) authentification (S6) du message multidiffusé (MC-N) provenant de l'appareil émetteur et sauvegardé dans l'appareil récepteur à l'aide de la clé d'authentification cryptographique reconnue valable (K) par l'appareil récepteur ;

l'appareil émetteur signant, à la phase d'initialisation (IP), la valeur de fonction d'initialisation ($h_n$) avec une clé cryptographique privée ($K_{priv}$) et la distribuant à des appareils récepteurs qui vérifient la signature de la valeur de fonction d'initialisation reçue ($h_n$) respectivement au moyen d'une clé publique ($K_{pub}$),

la valeur de fonction d'initialisation ($h_n$) étant sauvegardée après vérification réussie de la signature pour la vérification subséquente de la validité de la clé cryptographique (K) contenue dans un message de validation de clé d'authentification (KRM) par l'appareil récepteur ;

la clé d'authentification cryptographique (K) contenue dans le message de validation de clé d'authentification (KRM) étant une valeur de hachage qui est formée par le maillon de chaîne ($h_{n-1}$) de la chaîne de hachage de protection de message précédant la valeur de hachage ($h_n$) contenue dans le dernier message de validation de clé d'authentification précédent dans la chaîne de hachage de protection de message calculée jusqu'à ce que la valeur d'ancrage de la chaîne de hachage de protection de message soit atteinte ;

la chaîne de hachage d'initialisation calculée à la phase d'initialisation (IP) par l'appareil émetteur à partir de la valeur d'ancrage de l'appareil émetteur étant calculée au moyen d'une fonction de hachage (H) dont les maillons de chaîne sont prévus pour initialiser d'autres chaînes de hachage, et plus particulièrement la chaîne de hachage de protection de message ;

différents types de messages multidiffusés (MC-N-TYP) étant prévus, l'appareil émetteur calculant, pour chaque type de message multidiffusé, respectivement à partir d'une valeur d'ancrage, une chaîne de hachage de type de message associée au moyen d'une fonction de hachage donnée (H) pour le type respectif de message multidiffusé (MC-N-TYP) ;

les différentes chaînes de hachage de type de message étant calculées respectivement à partir d'une valeur d'ancrage fournie par la chaîne de hachage d'initialisation, la valeur d'ancrage étant formée par un maillon de chaîne de la chaîne de hachage d'initialisation.

2. Procédé selon la revendication 1, la valeur de fonction d'initialisation ($h_n$) distribuée à la phase d'initialisation (IP) étant formée par une valeur de fonction de hachage qui est calculée au moyen d'une fonction de hachage donnée (H).

3. Procédé selon la revendication 2, la valeur de fonction de hachage ($h_n$) distribuée par l'appareil émetteur à la phase d'initialisation (IP) formant une valeur de hachage de référence qui forme le dernier maillon d'une chaîne de hachage de protection de message calculée par l'appareil émetteur, laquelle est calculée par l'appareil émetteur au moyen de la fonction de hachage donnée (H) à partir de la valeur d'ancrage de l'appareil émetteur à la phase d'initialisation (IP).

4. Procédé selon la revendication 1 à 3, l'appareil émetteur émettant, après l'émission du message multidiffusé (MC-N), dans un laps de temps (Δt) configurable prédéfini, un message de validation de clé d'authentification associé (KRM) qui contient la clé d'authentification (K) prévue pour l'authentification du message multidiffusé (MC-N).

5. Procédé selon la revendication 1 à 4, le message multidiffusé (MC-N) reçu et sauvegardé par l'appareil récepteur comportant des données de gestion (Header), des données utiles et un code d'authentification de messages (MAC).

6. Procédé selon la revendication 5, les données utiles du message multidiffusé (MC-N) étant formées par un message GOOSE (Generic Object Oriented Substation Events) ou un message SMV (Sample Measure Values).

**7.** Procédé selon la revendication 5 ou 6, le code d'authentification de messages (MAC) contenu dans le message multidiffusé (MC-N) étant calculé par l'appareil émetteur au moyen d'une fonction HMAC en fonction des données utiles du message multidiffusé (MC-N) et de la clé d'authentification cryptographique (K).

**8.** Procédé selon la revendication 7, l'appareil récepteur authentifiant le message multidiffusé (MC-N) reçu et sauvegardé si le code d'authentification de messages (MAC) contenu dans le message multidiffusé reçu (MC-N) coïncide avec un code d'authentification de messages (MAC') qui est calculé par l'appareil récepteur au moyen d'une fonction HMAC en fonction des données utiles du message multidiffusé (MCN) et de la clé d'authentification cryptographique (K) reconnue valable et contenue dans le message de validation de clé d'authentification (KRM).

# FIG 1

# FIG 2

# FIG 3

## FIG 4

SG        EG

$IP<h_n>$

MC-N

$KRM<K_{MC-N}>$

$h(K_{MC-N})$

IF $h(K_{MC-N})=h_n$
THEN Authenticate MC-N

## FIG 5

MC - N

| Header | GOOSE / SMV | MAC |
|--------|-------------|-----|

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

*   DE 102008046563 A1

**In der Beschreibung aufgeführte Nicht-Patentliteratur**

*   **Y. CHALLAL.** *A taxonomy of multicast data origin authentication: Issues and solutions*